(19) Europäisches Patentamt
European Patent Office
Office européen des brevets

(11) **EP 2 953 369 A1**

(12) **EUROPEAN PATENT APPLICATION**

(43) Date of publication:
**09.12.2015 Bulletin 2015/50**

(51) Int Cl.:
*H04N 21/234* (2011.01)    *H04N 21/434* (2011.01)

(21) Application number: **15168853.8**

(22) Date of filing: **22.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **03.06.2014 GB 201409813**

(71) Applicant: **Nokia Technologies Oy**
**02610 Espoo (FI)**

(72) Inventors:
• **Mate, Sujeet Shyamsundar**
**33720 Tampere (FI)**
• **Curcio, Igor Danilo Diego**
**33100 Tampere (FI)**

(74) Representative: **Seppo Laine Oy**
**Itämerenkatu 3 B**
**00180 Helsinki (FI)**

(54) **METHODS, APPARATUSES AND COMPUTER PROGRAMS FOR ADAPTING CONTENT**

(57) The present disclosure relates to methods, apparatuses and computer programs for adapting content. In one aspect of the disclosure there is provided a method comprising causing, at least in part, actions that result in: generating, for primary content to be broadcasted for output on a primary content output device, rendering adaptation information configured for use in adapting the rendering of the primary content on a secondary content output device thereby providing an output of secondary content which is derived from the broadcasted primary content;

wherein the primary content comprises at least a first media portion having a first temporal output characteristic;

wherein the rendering adaptation information comprises temporal information configured for use in adjusting the rendering of the at least first media portion so as to enable generation of secondary content comprising at least a second media portion having a second temporal output characteristic that can differ from the first temporal output characteristic of the at least first media portion.

**Description**

TECHNOLOGICAL FIELD

Examples of the present disclosure relate to methods, apparatuses and computer programs for adapting content. In particular, though without prejudice to the foregoing, certain examples relate to methods, apparatuses and computer programs for adapting the rendering of broadcasted primary content for output on a secondary content output device.

BACKGROUND

Broadcasted content is typically created and produced for optimal output/display on a primary content output device, for example a viewer's main home television set. Such broadcasted material may be referred to as 'primary broadcast content'. With the growing availability and functionality of personal media consumption devices (such as: hand portable devices, mobile phones, tablets, personal computers and laptops) it is not uncommon for a viewer to watch broadcasted primary content on the viewer's main home television set, e.g. having a 30+ inch (76+ cm) screen, whilst also looking at complementary content (i.e. content related to the primary content) on a personal media consumption device (for example a mobile phone having less than a 6 inch/5 cm screen). In other words, broadcasted primary content is outputted on a primary content output device and related complimentary content, known as secondary content or secondary screen content, is outputted on a secondary content output device.

However, conventional systems for generating secondary content are not always optimal. Issues which may arise include: sub-optimal viewing of the secondary content on the relatively small screen of the secondary output device (thus giving rise to an inadequate secondary content viewing experience) and/or the secondary content needing to be specifically and individually created, separately of the primary content (thereby leading to increased production costs and efforts for the content provider).

Certain examples of the present disclosure seek to improve the production of secondary content for output on secondary devices.

BRIEF SUMMARY

According to various, but not necessarily all, embodiments of the invention there is provided a method comprising causing, at least in part, actions that result in:

generating, for primary content to be broadcasted for output on a primary content output device, rendering adaptation information configured for use in adapting the rendering of the primary content on a secondary content output device thereby providing an output of secondary content which is derived from the broadcasted primary content; wherein the primary content comprises at least a first media portion having a first temporal output characteristic; wherein the rendering adaptation information comprises temporal information configured for use in adjusting the rendering of the at least first media portion so as to enable generation of secondary content comprising at least a second media portion having a second temporal output characteristic that can differ from the first temporal output characteristic of the at least first media portion.

According to various, but not necessarily all, embodiments of the invention there is provided a method comprising causing at least in part actions that result in: one or more of:

receiving broadcasted primary content, wherein the primary content comprises at least a first media portion having a first temporal output characteristic; receiving rendering adaptation information configured for use in adapting the rendering of the primary content on a secondary content output device; and generating secondary content from the primary content based on the rendering adaptation information; wherein the rendering adaptation information comprises temporal information for use in adjusting the rendering of the at least first media portion so as to enable generation of at least a second media portion having a second temporal output characteristic that can differ from the first temporal output characteristic of the at least first media portion.

According to various, but not necessarily all, embodiments of the invention there is provided a method comprising causing, at least in part, actions that result in:

generating, for primary content to be broadcasted for output on a primary content output device, rendering adaptation information configured for use in adapting the rendering of the primary content on a secondary content output device thereby providing an output of secondary content which is derived from the primary content; and
wherein: the rendering adaptation information comprises two or more sets of spatial co-ordinates for identifying two or more media portions of the primary content for output as secondary content.

According to various, but not necessarily all, embodiments of the invention there is provided a method comprising causing, at least in part, actions that result in:

generating, for primary content to be broadcasted for output on a primary content output device, rendering adaptation information configured for use in adapting the rendering of the primary content on a secondary content output device thereby providing an output of secondary content which is derived from the primary content;
wherein the primary content comprises n dimensional content; and
wherein the rendering adaptation information is configured for use in adjusting the rendering of the n dimensional primary content so as to enable generation of k dimensional secondary content, wherein k<n.

According to various, but not necessarily all, embodiments of the invention in a method in accordance with the invention the rendering adaptation information comprises two or more sets of spatial co-ordinates for identifying two or more media portions of the primary content.

According to various, but not necessarily all, embodiments of the invention there is provided an apparatus comprising means configured to perform at least the above methods.

According to various, but not necessarily all, embodiments of the invention there is provided an apparatus comprising: at least one processor; and at least one memory including computer program code, the at least one memory and the computer program code configured to, with the at least one processor, cause the apparatus at least to perform the above methods.

According to various, but not necessarily all, embodiments of the invention there is provided a computer program that, when run on a computer, performs at least the above methods.

According to various, but not necessarily all, embodiments of the invention there is provided a non-transitory computer readable medium encoded with instructions that, when performed by at least one processor, causes at least the above methods to be performed:

According to various, but not necessarily all, embodiments of the invention there is provided examples as claimed in the appended claims.

BRIEF DESCRIPTION

For a better understanding of various examples that are useful for understanding the brief description, reference will now be made by way of example only to the accompanying drawings in which:

Figure 1 schematically illustrates a method according to the present disclosure;
Figures 2A and 2B schematically illustrate an example of primary content and secondary content;
Figure 3 schematically illustrates a method according to the present disclosure for a content provider;
Figure 4 schematically illustrates a method according to the present disclosure for a secondary content generator;
Figure 5 schematically illustrates a system for use with the methods of Figures 4 and 5;
Figure 6 schematically illustrates a yet further method according to the present disclosure for a content provider;
Figure 7 schematically illustrates a yet further method according to the present disclosure for a secondary content generator;
Figures 8A and 8B schematically illustrate a yet further example of primary content and secondary content;
Figures 9A and 9B schematically illustrate a yet further example of primary content and secondary content;
Figure 10 schematically illustrates a yet further example of primary content; and
Figure 11 schematically illustrate an apparatus according to the present disclosure.

DETAILED DESCRIPTION

The Figures schematically illustrate a method (100) comprising causing, at least in part, actions that result in:

generating, for primary content (200) to be broadcasted for output on a primary content output device (511), rendering adaptation information (RAI) configured for use in adapting the rendering of the primary content on a secondary content output device (524) thereby providing an output of secondary content (201) which is derived from the broadcasted primary content;

wherein the primary content comprises at least a first media portion (200b) having a first temporal output characteristic;

wherein the rendering adaptation information comprises temporal information configured for use in adjusting the rendering of the at least first media portion so as to enable generation of secondary content comprising at least a second media portion (201 b) having a second temporal output characteristic that can differ from the first temporal output characteristic of the at least first media portion.

The broadcasted primary content may, for example, be live broadcasted media content including: images, video, audio visual media, television programmes, films, etc. The broadcasting of primary content may be delivered via stream, broadcast or multicast based delivery solutions. The primary content may be broadcasted by any suitable means, for example: analogue or digital, wired or wireless broadcasting or transmissions of live content. Alternatively, the broadcasting may correspond to the streaming of content over the internet using any suitable protocol, for example, the media may be transmitted over RTSP/HTTP.

The primary content is produced and configured such that it is optimized optimal output on a primary output display device. The primary content output device is a device for outputting the broadcasted primary content. It may, for example, be a television, display, or audio visual output device. The primary content output device may have superior output capabilities (e.g. larger screen, higher resolution, 3D capabilities, faster processor, larger memory/storage) than that of the secondary content output device.

The secondary content output device is a device for outputting the secondary content. It may, for example, be a personal media consumption device, a hand portable electronic device, a mobile device, a mobile telephone, a laptop or a personal computer, display, or audio visual output device having inferior output capabilities than that of the primary content output device.

The first media portion may correspond to a segment of the primary content. For example it may correspond to spatial parts/regions/areas of the primary content such as the whole or specific part of an image of a frame. The first media portion may additionally or alternatively correspond to a temporal portion or segment of the primary content, such as a sequence of images or video displayed during a time interval along with associated sound for the time interval.

The rendering adaptation information comprises information, such as metadata, or instructions that can be used to control the rendering of the primary content for output as secondary content. The rendering adaptation information may identify or define one or more media portions of the primary content (i.e. source content) and define the manner in which the media portions are to be rendered for output as secondary content (i.e. destination content). The rendering adaptation information comprises temporal information that can be used to adjust/control the rendering so that a temporal characteristic of a media portion of the primary content can be different from a temporal characteristic of a media portion of the secondary content. In certain examples, the rendering adaptation information may be Secondary Screen Content (SCC) or transformed content.

Examples of the invention provide rendering adaptation information that enables modification of the rendering of the primary content to generate secondary content derived from primary content. The rendering adaptation information comprises temporal information for use in adjusting the rendering of a first media portion of the primary content to provide a second media portion of the secondary content having a temporal output characteristic that differs from the temporal output characteristic of the first media portion.

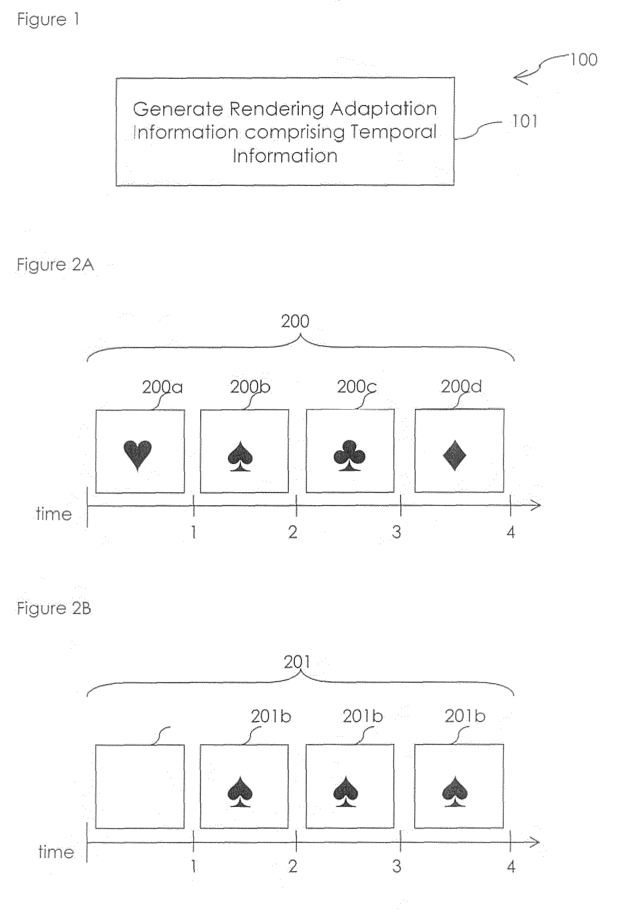

For example, with regard to Figure 2A, the primary content 200 comprises a sequence of 4 images/media portions 200a - 200d each displayed for 1 second. This may be represented in the following table:

**Table 1**

| Primary Content Media Portion | Temporal Output Characteristic (TOC) |
|---|---|
| 200a | $0 \leq TOC \leq 1$ |
| 200b | $1 \leq TOC \leq 2$ |
| 200c | $2 \leq TOC \leq 3$ |
| 200D | $3 \leq TOC \leq 4$ |

Figure 2B, illustrates the secondary content 201 derived from the primary content by adapting the rendering of the primary content. The secondary content comprises an image displayed for 3 seconds. This may be represented in the following table:

**Table 2**

| Secondary Content Media Portion | Temporal Output Characteristic |
|---|---|
| 201b | $2 \leq TOC \leq 4$ |

The rendering adaptation information may comprise temporal information used to adapt the temporal output characteristic of a primary media portion in its rendering as a second media portion of secondary content.

The rendering adaptation information may take the following form:

$$RAI(\text{for secondary content } 1 \leq t \leq 4 \text{ render primary content } 1 \leq t \leq 2)$$

In this example, a media portion's temporal output characteristic is changed from $1 \leq TOC \leq 2$ to $2 \leq TOC \leq 4$. Accordingly, instead of the image of a club being displayed for 1 second then being replaced by another image as is the case for the primary content, in the secondary content, the duration of the output/rendering/display of the image of the club is increased to 3 seconds.

Advantageously, the rendering adaptation information enables a derivation of the secondary content based on the broadcasted primary content. This leverages the content of the broadcasted primary content by enabling its re-use for secondary content. Thereby saving production costs and effort in having to specifically newly generate separate secondary content. This also ensures that the secondary content is complimentary to the primary content and semantically salient to the primary content since it is derived therefrom. Moreover, whilst a media portion of the primary content may be used as the basis for a media portion of the secondary content, the secondary content's media portion is not limited to the temporal output characteristic of the primary content's media portion from which the secondary media portion is derived.

By way of an example to illustrate an advantage of various examples of the present disclosure, one might consider a scenario wherein the broadcasted primary content corresponds to the broadcast of a live sports match, e.g. a game of cricket. A particular media portion of the primary content may correspond to the temporary display of a scorecard, e.g. for a period of five seconds. In examples of the present invention, the rendering adaptation information enables the scorecard to be rendered as secondary content for output on a secondary content device. Moreover, significantly, the temporal output characteristic/display duration of the scorecard in the secondary content could be adjusted such that it is outputted for more than five seconds and remains displayed on the secondary content output device. That way, a viewer can watch the broadcasted game of cricket on his primary display and refer to the scorecard displayed on his secondary content device, e.g. mobile phone.

An example of a method according to the present disclosure will now be described with reference to the figures. Similar reference numerals are used in the figures to designate similar features. For clarity, all reference numerals are not necessarily displayed in all figures.

Fig 1 schematically illustrates a method 100 according to an example of the present disclosure.

In block 101, rendering adaptation information is generated that comprises temporal information. The rendering adaptation information is configured for use in adapting the rendering of primary content on a secondary content output device thereby providing an output of secondary content which is derived from broadcasted primary content. The rendering adaptation information may comprise instructions that control the rendering of broadcasted primary content on a secondary content output device.

Figure 2A shows an example of primary content 200, i.e. content configured/optimized for output/rendering/display on a primary content output device, for example by virtue of the resolution or image size of the content. The primary content comprises a plurality of media portions 200a - 200d, each having associated temporal output characteristics TC.

In this example, the primary content 200 comprises a sequence of images of a heart, a spade, a club and a diamond each of which, when rendered on an output device, is displayed for one second. The rendering adaptation information comprises temporal information configured for use in adjusting the rendering of at least one of the media portions of the primary content so as to enable generation of secondary content comprising at least a second media portion having a second temporal output characteristic that can differ from the first temporal output characteristic of one of the first media portions of the broadcasted primary content.

For example, a media portion 200b of the primary content 200 may have a temporal output characteristic representative of a duration of the output/display of the media portion 200b when rendered, namely that it is displayed for one second. The rendering adaptation information may comprise temporal information that may be used in adjusting the temporal characteristic of the first media portion 200b upon rendering on a secondary content output device such that it is output as a second media portion 201 b of secondary content 201. This enables the temporal output characteristic of the second media portion 201 b to be different from that of the first media portion 200b. In the example of Figures 2A and 2B, whereas the first media portion 200b of the primary content is only outputted for one second, the second media portion 201 b of the secondary content 201 is outputted for three seconds.

The temporal output characteristic may relate to one or more of:

temporal co-ordinates of a media portion, i.e. when and for how long the media portion is output/rendered/displayed
a duration of output/display/rending of a media portion, i.e. how long it lasts,
a start time for commencing output of a media portion,
an end time for ceasing output of a media portion,
a time index associated with a media portion, and
a time interval between repeated outputs of a media portion.

The media portions may relate to one or more of at least a part of displayed text, at least a part of a static or dynamic visual image, at least a part of a sequence of images, at least a part of an audio/visual video and at least a part of a region of interest of broadcasted content.

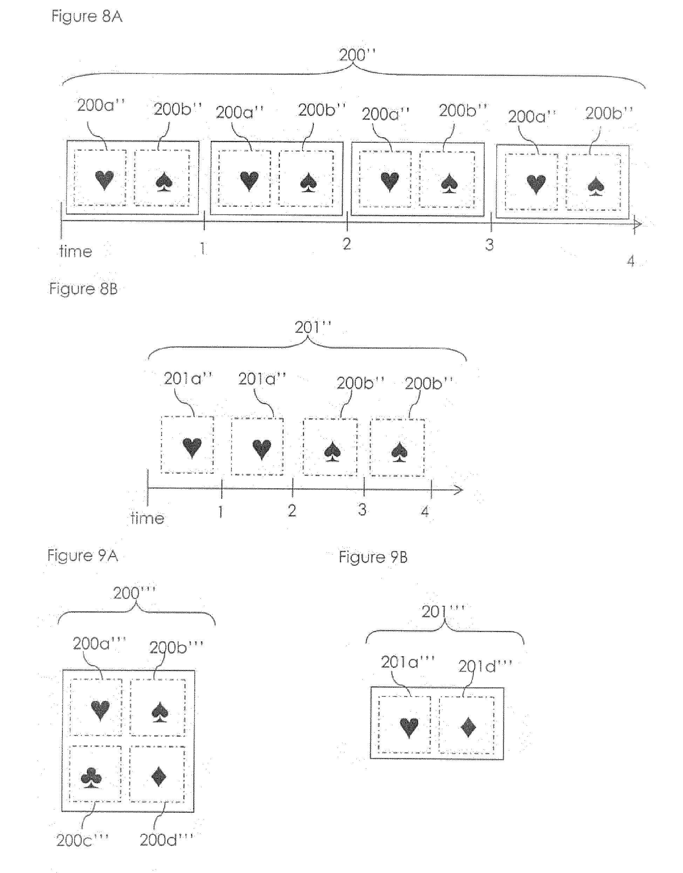

The media portions may correspond to an entire frame of content or a subsection of a frame of a content. For example, the media portion may relate to only a specific region or area of a frame of the content (as discussed below with reference to Figures 8A, 8B, 9A and 9B). One or more media portions of the primary content may be identified or defined in the rendering adaptation information by virtue of its/their spatial location(s) within the primary content, i.e. spatial co-ordinates (or a set of spatial co-ordinates) defining the area (or areas) of the desired media portions of the primary content with respect to the primary content's frame of reference. Additionally or alternatively, one or more media portions of the primary content may be identified or defined based on its/their temporal co-ordinates, i.e. time index(es) associated with the start and end points of the media portion(s) with respect to the primary content's frame of reference.

For example, if one were to consider a scenario wherein the primary content related to a live broadcast of a football game and the media portion may relate to a video replay clip of a scoring of a goal. The rendering adaptation information may comprise temporal information to enable adjusting of the rendering of the video clip on a secondary output device so that it is not simply displayed once, but is repeatedly played back/looped on the secondary content output device. The rendering adaptation information comprises information to enable the control of the rendering of the video clip of the primary content to generate secondary content comprising the repetition and looping of the highlighted video for the secondary content. Thus, the temporal output characteristic of the video clip (i.e. being repeatedly played back/looped) in the secondary content differs from the temporal characteristic of the video clip in the primary content (namely being played only once).

The rendering adaptation information may comprise one or more of:

temporal co-ordinates for identifying/defining one or more media portions within the primary content, i.e. source temporal co-ordinates (see above with respect to Figure 2A and table 1),
temporal co-ordinates for defining temporal output characteristics of one or more media portions of the secondary content, i.e. destination temporal co-ordinates (see above with respect to Figure 2B and Table 2),
a mapping of temporal co-ordinates of one or more media portions of the primary (source) content to temporal co-ordinates of one or more media portions of the secondary (destination) content,
spatial co-ordinates for identifying/defining one or more media portions within a primary content with respect to the primary content's frame of reference (see below with respect to Figs 8A and 9A),
spatial co-ordinates for defining spatial output characteristics of one or more media portions of the secondary content with respect to the secondary content's frame of reference (see below with respect to Figs 8B and 9B), and
a mapping of spatial co-ordinates of one or more media portions of the primary content to spatial co-ordinates of one or more media portions of the secondary content (as discussed below with respect to Figs 8A-9B).

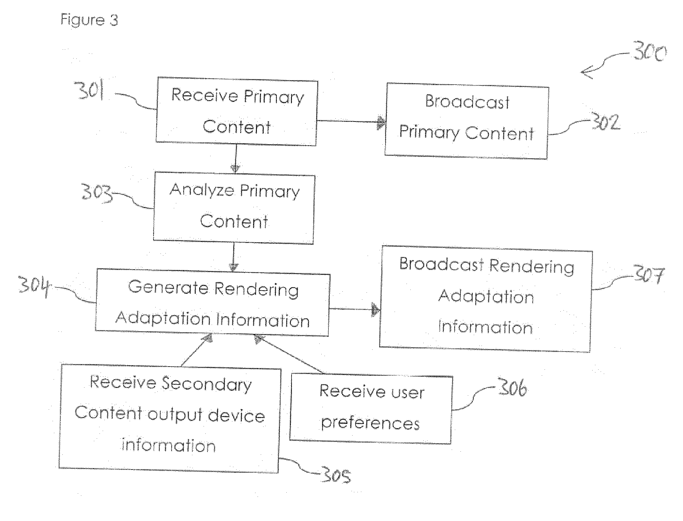

Fig 3 schematically illustrates a method that may be carried out by a service provider, such as content provider 501.

In block 301, the primary content may be received from a source of primary content such as a primary content generator. Alternatively the content provider may not receive the primary content from a source but instead creates the primary content itself. In step 302, the primary content is broadcasted for reception by a primary content receiving device 510 for output on a primary content output device 511. The primary content receiving device and primary content output device may be provided in one device 512, e.g. a smart TV, or may be provided as separate device such as a set top box and display.

In block 303, the primary content is analyzed and, in block 304, rendering adaptation information is generated based on the analysis of the primary content. The analysis of the primary content seeks to determine information about the primary content that may be used in the rendering modification information for creating the secondary content, e.g.

secondary content suitable for a given capability of a secondary content output device.

The analysis of the primary content may comprise one or more of:

determining metadata associated with the primary content, such as a programme name, programme type or program information, etc.

determining identifiers or markers of media portions or regions of interest. The primary content may also be provided with metadata that identifies particular portions or regions of interest, such as a highlights, action replays or important content. Identifiers of such portions of interest of the primary content or media portions of primary content that would be particularly suitable for use as secondary content media portions may be provided by flags or markers created upon production of the primary content or upon broadcast of the primary content.

performing image analysis of the primary content (for example so as to determine media portions of primary content indicative of video and/or determine media portions of primary content indicative of still images or text which may be suitable for media portions of secondary content,

performing audio analysis of the primary content to determine the nature of the content and appropriate switch over times to start and stop output of a media portion on a secondary content (as discussed in greater detail below),

identifying regions of interest of the primary content, for example face detection/person detection to identify significant persons or objects presented,

determining temporal output characteristics of regions of interest of the primary content,

determining spatial characteristics of regions of interest of the primary content, and

identifying semantically salient media portions of the primary content.

The results of such analysis may identify one or more media portions of the primary content as well as determining temporal information for the rendering adaptation information to enable control of a temporal output characteristic of the identified media portion upon rendering on a secondary content output device.

The generation of the rendering adaptation information may additionally be based on information concerning the secondary output device, such as its output capabilities. For example, in block 305, secondary output device capability information may be received. This may relate to a display size, display resolution and/or processing capabilities of the secondary output device which could also affect the rendering adaptation information and determine how the media portion of the primary content is adapted for output as secondary content. For example, the media portion of the primary content could be re-scaled, reduced in resolution, have its aspect ratio changed so as to be optimized for output on a particular secondary output device.

Furthermore, the generation of rendering adaptation information could also be based on user preferences, which could be received in block 306. The user preferences may relate to what media portions are selected for secondary content. For example, a user may select a preference to have textual media portions of the primary content in the secondary content or have video clips of the primary content in the secondary content.

The rendering adaptation information generated in block 304 (based on the analysis of the primary content as well as optionally based on secondary output device capability information and user preferences) is broadcasted in block 307. One or more differing versions of the rendering adaptation information may be generated for broadcasting, each optimized for secondary content output devices of differing output capabilities.

The rendering adaptation information may be transmitted in synchronisation with the transmission of the primary broadcast content.

In some examples, the rendering adaptation information may be signalled from the content provider to a receiving device either in-band with streamed primary content or maybe signalled out-of-band depending on the choice of content transmission technology. Any suitable protocol may be utilised. For example, the media may be transmitted over RTSP/HTTP and the rendering adaptation information may be transported over HTTP/SIP and contained in suitable XML/JSON/SDP format.

The broadcast of the primary content may be suitably deferred/delayed to ensure the signaling of rendering adaptation information corresponding to a particular temporal segment in the primary broadcast content happens at a sufficiently advanced period to ensure its availability at the secondary content output device to enable optimal rendering. The time gap between the transmission of primary content and the rendering adaptation information depends on the processing delay required to generate the rendering adaptation information, which could involve semi/fully automated analysis or manual analysis/supervision of the primary content to determine the appropriate rendering adaptation information.

The method blocks 301, 303, 304, 305, 306 of Figure 3 could also be used in a content receiving device wherein in block 301 broadcasted primary content is received from the content provider. Instead of block 307, the rendering adaptation information is conveyed to a secondary content receiving device. Instead of block 302, the primary content may be outputted on a primary content output device and/or conveyed to the secondary content to use the same in combination with the primary content to generate secondary content for output.

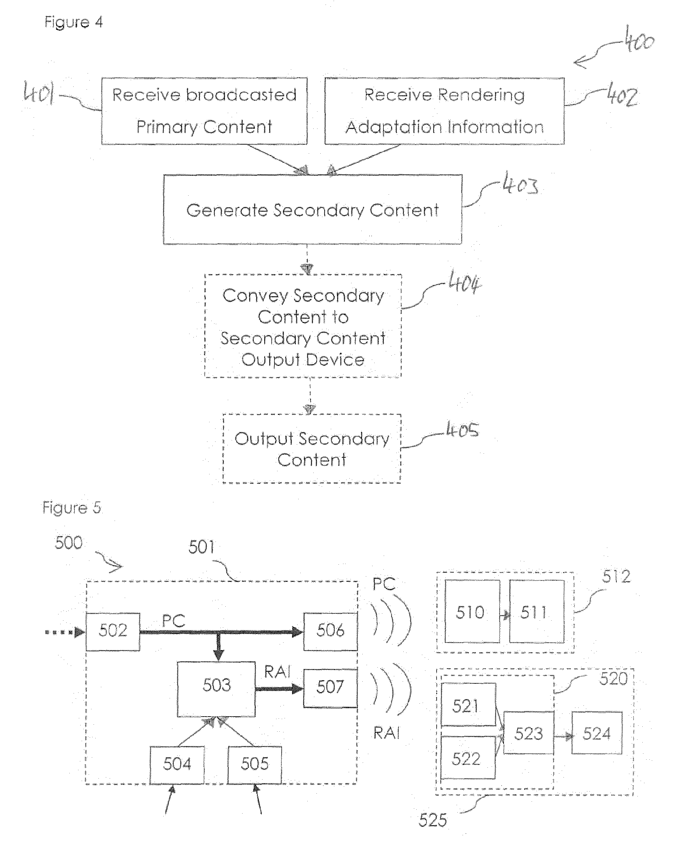

Figure 4 schematically illustrates a method 400 for use with a secondary content generator 523 of a receiving device 520.

In block 401, the broadcasted primary content is received. In block 402, the rendering adaptation information is also received. The rendering adaptation information may be broadcasted to the receiving device or it may be made available to the receiving device, for example by being streamed to or downloaded to the receiving device. In block 403, secondary content is generated from the primary content based on the rendering adaptation information. In block 405, the secondary content is outputted from the secondary content output device 524, such as a screen of a mobile handheld portable device. Where the receiving device 520 is separate from the secondary content output device 524, in block 404 the generated secondary content is conveyed to the secondary content output device, for example via a wireless or wired connection.

Figure 5 shows a system comprising the content provider 501, for use with the method of Fig 3, and the receiving apparatus 520 for effecting the method of Fig 4. Also shown is a device 512 for receiving and outputting broadcasted primary content.

At the content provider side, various modules are provided to effect the functionality of Fig 3, for example receiver 502 to receive the primary content from a source of primary content (if the content provider does not itself generate the primary content). Controller 503 effects the analysis of the primary content as well as generation of the rendering adaptation information. Modules 504 and 505 may receive secondary output device capability information and user preferences which may be used in the generation of the rendering adaptation information. Module 506 may be configured to broadcast the primary content and module 507 may be configured to broadcast the rendering adaptation information generated by the controller in 503.

The broadcasted primary content may be received by a primary content receiver 510 for output on a primary content output device 511, such as a television. The primary content receiver and output device may be comprised in a single device 512 for receiving and outputting primary content or may be provided as separate devices, one which separately receives the primary content and then provides a signal to the primary content output device for output.

The broadcasted primary content is also received by a primary content receiver 521 of a secondary content generator device 520. The broadcasted rendering adaptation information is received by receiver 522 of the secondary content generator device 520. A controller 523 may generate secondary content from the primary content received at the receiver 521 based on the received rendering adaptation information received at the receiver 522, a video memory/buffer may use used to cache or temporally store media portions for rendering/output having temporal output characteristics in accordance with the rendering adaptation information. The secondary content generated at the controller 523 may be conveyed to a secondary content output device 524 for output/display/rendering. In certain examples, secondary content generation device 520 may be combined with the secondary content output device 524 in secondary content device 525. In other examples, the secondary content generating device 520 may be separate from the secondary content output device 524.

In yet further examples, the secondary content generating device 520 may be provided as part of the primary content receiving device 510. In such examples, the primary content receiving device may comprise a controller to analyse the primary content and generate rendering adaptation information based on the same (as well as optionally based on secondary content output device capability information and user preferences). The rendering adaptation information generated in the primary content receiving device could then be used, in combination with the received primary content, to generate secondary content. This secondary content could then be conveyed to a secondary content output device to be outputted.]

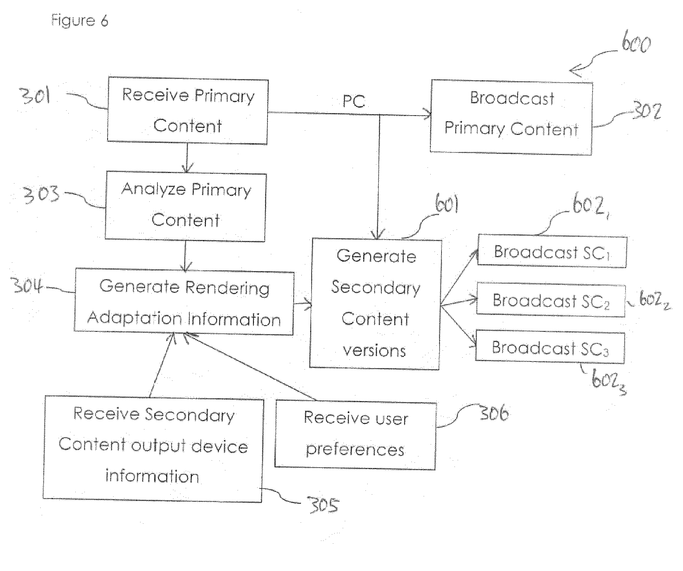

Figure 6 schematically illustrates a further method 600 which may be implemented by a content provider. Several of the steps, 301 to 306, correspond to those as discussed with respect to Fig 3 thus shall not be further discussed for the sake of brevity. The main difference between the method of Fig 3 and the method of Fig 6 is that instead of broadcasting rendering adaptation information (as is done in 307 of Fig 3) so that secondary content is to be generated at a receiving device, e.g. 520, in block 601 of the method of Fig 6, the content provider itself generates the secondary content from the primary content based on the generated rendering adaptation information. Moreover, one or more differing versions of the secondary content may be generated, e.g. $SC_1$ - $SC_3$ for broadcasting as shown in blocks $602_1$ - $602_3$.

The various versions of the secondary content may be generated in accordance with various differing capabilities of secondary output devices, i.e. based on the information received in block 305. For example, $SC_1$ may be adapted so as to be optimized for display on a mobile phone device for example having a display screen size of less than 5" whereas $SC_2$ could be adapted so as to be optimized for display on a tablet device having a display screen size of 7" to 10" and the $SC_3$ could be adapted so as to be optimized for display on a laptop device display device having a display screen of 10" to 17". In addition or alternatively, the various versions of the secondary content may comprise one or more of different media portions of secondary content (e.g. a mobile phone screen may only be able to adequately display a single media portion, whereas a tablet device may be able to display two of more media portions simultaneously), different compression ratios or file format of content or modified in some other manner so as to be optimized for differing types of secondary content output devices.

A primary content receiving device such as 512 of Fig 5 may receive the broadcasted primary content and output the same on primary content display device 511.

A secondary content receiving device may select and receive the appropriate secondary content version. This could be based on a device identifier associated with each of the versions of the secondary content. The received secondary content may then be outputted on a secondary content output device such as 524.

Advantageously, in this example, secondary content receiving device does not need to perform the adaptation of the rendering of the primary content to generate the secondary content itself but simply receives the secondary content for output. Thus, the secondary content receiving device for use with Figure 6 requires less technical capabilities and fewer processing/memory resources that the secondary content receiving device of Figure 5.

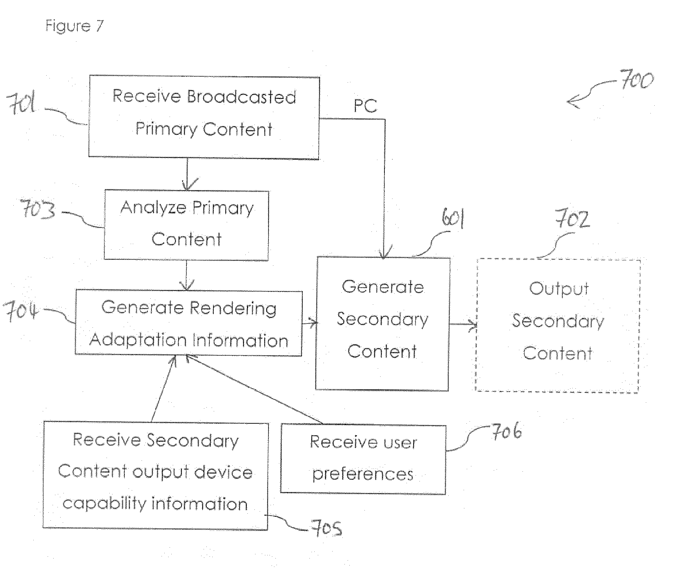

Figure 7 schematically illustrates a method for use in a secondary content generation device. In block 701, broadcasted primary content is received. This is analyzed in block 703 responsive to which rendering adaptation information is generated in block 704, which may further be dependent upon received secondary content output device capability information in block 705 and/or received user preferences in block 706. Secondary content is generated from the received broadcasted primary content in block 601 based on the rendering adaptation information generated in block 704. In block 702, the generated secondary content may then be outputted on a secondary content output device, e.g. 524. The secondary content generator which performs the method of Fig 7 may be separate from the secondary content output device or they may be provided in the same overall device.

Figure 8A schematically illustrates a further example of primary content 200". In this example, each frame of the primary content is displayed for one second and each frame comprises two media portions 200a", comprising an image of a heart on the left-hand side of the content frame, and media portion 200b" comprising an image of a spade on a right-hand side portion of the content frame. Thus each frame of the primary content comprises a plurality of media portions which are displayed simultaneously.

This may be represented in the following table showing the temporal output characteristics and spatial characteristics (1 dimensional co-ordinates (x) within a frame of the content) as follows:

**Table 3**

| Primary Content Media Portion | Temporal Output Characteristic | Spatial Characteristic |
|---|---|---|
| 200a" | $0 \leq TOC \leq 4$ | (1) |
| 200b" | $0 \leq TOC \leq 4$ | (2) |

The above table indicates that the media portion 200a" is displayed for the entirety of the four second interval and is located in the left-hand most side. This may be represented by 1 dimensional spatial co-ordinate $x = 1$. The media portion 200b" is also displayed for the entirety of the four second interval but on a right-hand side portion of the frame. This may be represented by 1 dimensional spatial co-ordinate $x = 2$. I.e. the media portions 200a" and 200b" have overlapping temporal intervals. In order to optimally render such primary content on a secondary content output device, examples of the disclosure enable 'temporal offsetting' of the rendering of the primary content on a secondary content output device.

According to a method according to the present disclosure, the rendering adaptation information may comprise two or more sets of spatial co-ordinates for identifying two or more media portions of the primary content. The rendering adaptation information may be configured for use in adjusting the rendering of the primary content so as to enable generation of secondary content comprising two or more media portions derived from the identified two or more media portions of the primary content but adjusting the temporal output characteristics of the media portion of the secondary content such that they are different to the temporal output characteristics of the primary content.

Such 'temporal offsetting' is shown in Fig 8B. Here, secondary content 201' is derived from the primary content 200" having been adapted in view of rendering adaptation information. In this example, the rendering adaptation information has adjusted the temporal output characteristics of 200a" from having a duration of four seconds in the primary content to having a duration of two seconds in the secondary content. Likewise, the temporal output characteristics of the other media portion 200B" has been adjusted from four seconds in the primary content to two seconds in the secondary content.

The rendering adaptation information may take the following form:

$$RAI(\text{for secondary content } 0 \leq t \leq 2 \text{ render primary content } x=1; \text{ for secondary content } 2 \leq t \leq 4 \text{ render primary content } x=2)$$

Whilst a primary content device, such as a large widescreen TV (e.g. 30"+ screen size) may be perfectly capable of adequately displaying both media portions 200a" and 200b", when the primary content is rendered on a secondary content output device having a smaller screen size, e.g. less than 7", displaying both 200a" and 200b" simultaneously together on the small screen may result in unacceptable viewing. Instead, examples of the present invention enable the selection of just one of the media portions for a first period of time then swapping to another different media portion at a second period of time. Such a temporal offset of the rendering of the media portions enables the output of both media portions but separately at a larger size as compared to displaying both media portions simultaneously at a smaller size.

This is particularly useful where the primary content comprises has a plurality of simultaneous media portions as it enables the generation of secondary content having temporarily offset media portions so that the plurality of media portions can be separately and sequentially output on a secondary content output device.

The rendering adaptation information may also comprise information relating to transition effects, e.g. relating to the transition at t=2 between the rendering of media portion 201 a" and the rendering of media portion 201 b", for example defining when the switching of media portions is to occur. The rendering adaptation information may also comprise information relating to the audio track identifier to be output as secondary content. For example, enabling the output of a left channel audio signal when rending 201 a" and a right channel audio signal when rendering 201b". The rendering adaptation information may also comprise overlay information.

The following scenario may assist the reader in appreciating the advantage of this example. In this scenario the primary content is a 16 x 9 widescreen aspect ratio video of a conversation between two people, a first person on a left-hand side of the scene and a second person on a right-hand side of the scene. In the video, the first person on the left-hand side of the scene is speaking for the first two seconds and then the second person on the right-hand side of the scene is speaking for the second two seconds. Following analysis of the primary content, e.g. audio analysis of the stereo soundtrack, it may be determined that a region of interest for the first two seconds corresponds to a media portion of a left-hand side of the scene and for the subsequent two seconds there is a different region of interest, namely a media portion on the right-hand side of the scene. Examples of the invention enable secondary content to comprise two or more differing media portions, e.g. just a left hand side media portion (comprising the left-hand side person speaking in the first two seconds) and then switching over to a different media portion, namely the right-hand side media portion (comprising the second person speaking for the second two seconds). Thus, advantageously a spatial characteristic of portions of the secondary content may change, i.e. rendering a left-hand side portion of the primary content for the first two seconds of secondary content and rendering a right-hand side portion of the primary content for a subsequent two seconds of secondary content. This is to be contrasted to a conventional system in which broadcasted primary content is simply directly rendered (un-modified) on a secondary content output device, e.g. mobile phone with a 5" 3 x 4 aspect ratio display. This would result in either an unacceptably small letterboxed video of the widescreen content or a video cropped such that it would be missing parts of the left hand person and the right hand person.

Whilst Figs 8A and 8B illustrate 'temporal offsetting' of the rendering of media portions, Figs 9A and 9B illustrate 'spatial offsetting' of the rendering of media portions.

In Fig 9A the primary content 200''' comprises four media portions all simultaneously displayed which may be characterized as having temporal output characteristics and spatial characteristics (2 dimensional co-ordinates (x,y) within a frame of the content) as follows:

**Table 4**

| Primary Content Media Portion | Temporal Output Characteristic | Spatial Characteristic |
|---|---|---|
| 200a''' | $0 \leq TOC \leq 4$ | (1,2) |
| 200b''' | $0 \leq TOC \leq 4$ | (2,2) |
| 200c''' | $0 \leq TOC \leq 4$ | (1,1) |
| 200d''' | $0 \leq TOC \leq 4$ | (2,1) |

Figure 9B represents secondary content 201''' derived from the primary content 200''' in accordance with rendering adaptation information. The rendering adaptation information may comprises spatial co-ordinates for identifying/defining specific media portions of the primary content, namely media portions 200a''' and 200d''' for output as secondary content media portions 201a''' and 201b'''. The rendering adaptation information also defines the temporal output characteristics of the media portions 200a''' and 200d''' of the secondary content. This may be characterized in the following table:

**Table 5**

| Secondary Content Media Portion | Temporal Output Characteristic | Spatial Characteristic |
|---|---|---|
| 201a''' | $0 \leq$ TOC $\leq 4$ | (1,1) |
| 201d''' | $0 \leq$ TOC $\leq 4$ | (2,1) |

The heart media portion 200a''' in the primary content of Figure 9A is located in a top right position and the diamond media portion 200d''' is located in an opposite bottom right position of the primary content. In the secondary content, the rendering of these media portions have been adjusted such that their spatial characteristics are different "spatially offset". In the secondary content the heart media portion 201a''' is located on a left-hand side adjacent to the diamond media portion 201d''' located on a right-hand side of the secondary content. This example enables the selection of some not necessarily all media portions of primary content for rending and output simultaneously as secondary content.

The rendering adaptation information may take the following form:

$$\text{RAI(for secondary content } 0 \leq t \leq 4 \text{ and } (1,0) \text{ render primary content } (1,2); \text{ for}$$

$$\text{secondary content } 0 \leq t \leq 4 \text{ and } (2,0) \text{ render primary content } (2,1)$$

Examples of the disclosure enable media portions from the same temporal period in the broadcasted primary content to be rendered with spatial and/or temporal offsets allowing for the adapting of large screen content for smaller screens.

In some examples, the creation of the primary content for broadcast may comprise predetermined content deliberately structured in the recording or production phase so as to make use of the rendering adaptation more straightforward. For example, the primary content on screen may be positioned in a way that a simple cropping of frames of different sizes can deliver content of interest with emphasis on different subjects.

In certain examples, the primary content may comprise n dimensional content and the rendering adaptation information is configured for use in adjusting the rendering of the n dimensional primary content so as to enable generation of k dimensional secondary content. Here k<n may apply.

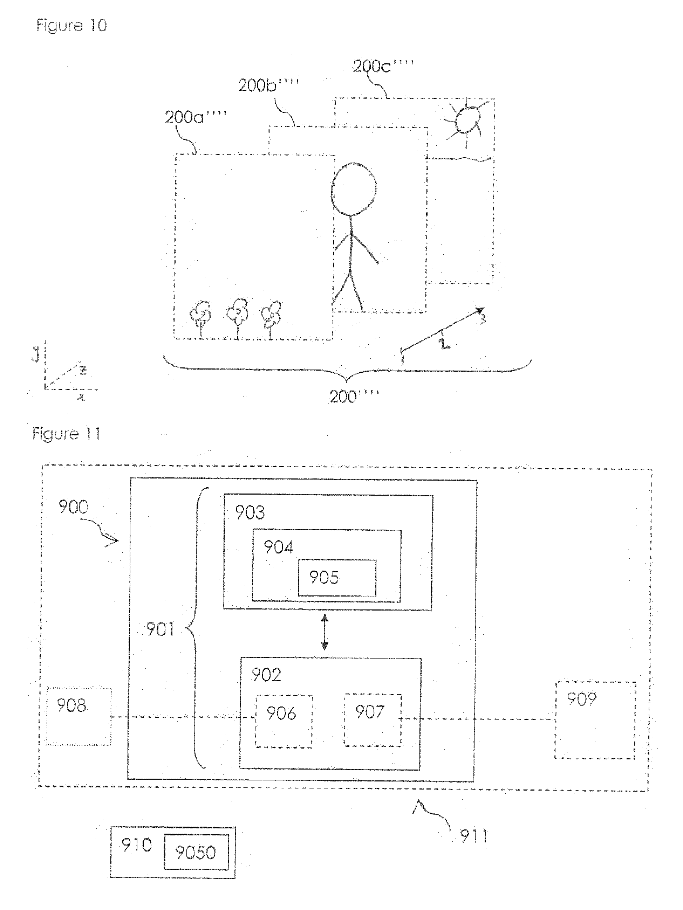

Figure 10 represents a further example of primary content 200'''' which comprises three-dimensional content. The three-dimensional content of the primary content may comprise 2 dimensional media portions 200a'''', 200b'''' and 200c'''' each having a different depth of field. The rendering adaptation information may comprise spatial co-ordinates for identifying one of the media portions for rendering as secondary content. In such examples, the rendering adaptation information may be configured for use in adjusting the rendering of the 3 dimensional primary content so as to enable the selection of a particular depth of field and outputting at least a part of a 2 dimensional media portion associated with the selected depth of field for secondary content, i.e. adjust the rendering of the 3 dimensional primary content (n=3) so as to enable generation of 2 dimensional secondary content (k=2).

The primary content's media portions may be characterized as having temporal output characteristics and spatial characteristics (3 dimensional co-ordinates (x,y,z) as in the following table:

**Table 6**

| Primary Content Media Portion | Temporal Output Characteristic | Spatial Characteristic |
|---|---|---|
| 201a''' | $0 \leq$ TOC $\leq 4$ | (1,1,1) |
| 201b''' | $0 \leq$ TOC $\leq 4$ | (1,1,2) |
| 201b''' | $0 \leq$ TOC $\leq 4$ | (1,1,3) |

Following analysis of the primary content, it may be determined that a particular region of interest relates to a media portion at a mid-range depth of field rather than the media portions at a foreground i.e. 200a'''' or a background i.e. 200c''''. The rendering adaptation information may further include spatial co-ordinates to identify the second media portion 200b'''' having a mid-range depth of field (z=2) and adjusting the rendering of the primary content such that a media portion of the secondary content derived from media portion 200b'''' might be outputted for the secondary content.

The rendering adaptation information may take the following form:

RAI(for secondary content 0 ≤ t ≤ 4 and (1,0) render primary content (1,1,2))

Such a filtering of the three-dimensional primary content to specific content of interest for rendering as secondary content reduces bandwidth for the transmission of secondary content as well as the processing required to the outputting of the secondary content.

Whilst the above examples have all been described in relation to the generation of rendering adaptation information comprising temporal information, according to another different aspect of the invention, the rendering adaptation information may comprise spatial information instead of (or in addition to) the temporal information.

For example, there may be provided a method comprising causing, at least in part, actions that result in:

generating, for primary content to be broadcasted for output on a primary content output device , rendering adaptation information configured for use in adapting the rendering of the primary content on a secondary content output device thereby providing an output of secondary content which is derived from the primary content; and

wherein: the rendering adaptation information comprises two or more sets of spatial co-ordinates for identifying two or more media portions of the primary content for output as secondary content.

In an alternative method, there may be provided a method comprising causing, at least in part, actions that result in:

generating, for primary content to be broadcasted for output on a primary content output device , rendering adaptation information configured for use in adapting the rendering of the primary content on a secondary content output device thereby providing an output of secondary content which is derived from the primary content;

wherein the primary content comprises n dimensional content; and

wherein the rendering adaptation information is configured for use in adjusting the rendering of the n dimensional primary content so as to enable generation of k dimensional secondary content, wherein k<n.

In certain examples, the primary content comprises 3 dimensional content having at least a first media portion at a first depth of field and a second media portion at a second depth of field; and the rendering adaptation information comprises spatial co-ordinates for identifying one of said first and second media portions for output as secondary content.

It is to be noted that each of the methods described above and shown in Figs. 1, 3, 4, 6 and 7 represent possible scenarios among others. In certain examples, one or more of the blocks may be performed in a different order or overlapping in time, in series or in parallel. Furthermore, one or more of the blocks may be omitted, added or changed in some combination of ways. For example, rather than generating rendering adaptation information comprising temporal information, the rendering adaptation information may comprise spatial information defining two of more media portions of primary content, or spatial information defining a media portion of primary content representing 3 dimensional content.

Examples of the invention may take the form of a method, an apparatus or a computer program. Examples may be implemented in hardware, software or a combination of hardware and software. An apparatus may be provided as at least one of: a module, a chipset or a device.

Examples of the invention have been described using schematic method illustrations and schematic block diagrams. It will be understood that each method and each block (of the method and block diagrams) and combinations of blocks can be implemented by computer program instructions of a computer program. The computer program instructions may be provided to one or more processor(s), processing circuitry or controller(s) such that the instructions which execute on the same create means for causing implementation of the functions specified in the block or blocks. The computer program instructions may be executed by the processor(s) to cause a series of operational steps to be performed by the processor(s) to produce a computer-implemented process such that the instructions can be executed on the processor(s) to provide steps for implementing the functions specified in the block or blocks.

Accordingly, the blocks support: a combination of means for performing the specified functions; combinations of steps for performing the specified functions; and computer program instructions/algorithms for performing the specified functions. It will also be understood that each block, and combination of blocks, can be implemented by special purpose hardware-based systems which perform the specified functions or steps or combination of special purpose hardware and computer program instructions.

Figure 11 schematically illustrates an apparatus 900 which may be used for carrying out the above-mentioned methods. The apparatus may be used by a content provider to carry out several of the steps of the content provider methods discussed above. Alternatively, the apparatus may be used for the receiver side devices e.g. in a primary content receiving/outputting device or a secondary content receiving/generating/output device.

Implementation of the controller 901 may be as controller circuitry. The controller 901 may be implemented in hardware alone, have certain aspects in software including firmware alone or can be a combination of hardware and software (including firmware).

As illustrated in Fig 11 the controller 901 may be implemented using instructions that enable hardware functionality, for example, by using executable computer program instructions 905 in a general-purpose or special-purpose processor 902 that may be stored on a computer readable storage medium (memory 903, storage device 910 etc) to be executed by such a processor 902.

The processor 902 is configured to read from and write to the memory 903. The processor 902 may also comprise an output interface 907 via which data (such as primary content, rendering adaptation information or secondary content) and/or commands are output by the processor 902 and an input interface 906 via which data (such as primary content, rendering adaptation information or secondary content) and/or commands are input to the processor 902.

The input interface 906 may be in communication with an input/receiving device 908, for example an antenna, modem or means for receiving: primary content, rendering adaptation information or secondary content. Where the apparatus is for use as a content provider, the output interface 906 may be in communication with an output device 908, for example an antenna, modem or means for broadcasting primary/secondary content or rendering adaptation information. Alternatively, where the apparatus is for use in as a content receiver and/or outputer, the output interface 906 may be in communication with a content output device 908, for example a visual or audio/visual output device such as a display or means for outputting media content. The apparatus 900 may be comprising in apparatus 911 which also includes input and output devices 908 and 909.

The memory 903 stores a computer program 904 comprising computer program instructions 905 that control the operation of the apparatus 900 when loaded into the processor 902. The computer program instructions 905, of the computer program 904, provide the logic and routines that enables the apparatus to perform the methods described above as well as illustrated in Figs 1, 3, 4, 6 and 7. The processor 902 by reading the memory 903 is able to load and execute the computer program 904.

The apparatus 900 therefore comprises:

at least one processor 902; and
at least one memory 903 including computer program code 905

the at least one memory 903 and the computer program code 905 configured to, with the at least one processor 902, cause the apparatus 900 at least to perform actions that result in:

generating, for primary content to be broadcasted for output on a primary content output device, rendering adaptation information configured for use in adapting the rendering of the primary content on a secondary content output device thereby providing an output of secondary content which is derived from the broadcasted primary content; wherein the primary content comprises at least a first media portion having a first temporal output characteristic; wherein the rendering adaptation information comprises temporal information configured for use in adjusting the rendering of the at least first media portion so as to enable generation of secondary content comprising at least a second media portion having a second temporal output characteristic that can differ from the first temporal output characteristic of the at least first media portion.

As illustrated in Fig 11, the computer program 904 may arrive at the apparatus 900 via any suitable delivery mechanism 910. The delivery mechanism 910 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 904. The delivery mechanism may be a signal configured to reliably transfer the computer program 904. The apparatus 900 may propagate or transmit the computer program 904 as a computer data signal.

Although the memory 903 is illustrated as a single component/circuitry it may be implemented as one or more separate components/circuitry some or all of which may be integrated/removable and/or may provide permanent/semi-permanent/ dynamic/cached storage.

Although the processor 902 is illustrated as a single component/circuitry it may be implemented as one or more separate components/circuitry some or all of which may be integrated/removable. The processor 902 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:

(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in the Figures and above-described methods may represent steps in a method and/or sections of code in the computer program 904. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a subclass of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed. For example whilst the figures refer to the generation of adaptation information comprising temporal information, the rendering adaptation information additionally or alternatively comprises spatial information relating to spatial co-ordinates of media portion(s) within the content.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. A method comprising causing, at least in part, actions that result in:

generating, for primary content to be broadcasted for output on a primary content output device, rendering adaptation information configured for use in adapting the rendering of the primary content on a secondary content output device thereby providing an output of secondary content which is derived from the broadcasted primary content;

wherein the primary content comprises at least a first media portion having a first temporal output characteristic; wherein the rendering adaptation information comprises temporal information configured for use in adjusting the rendering of the at least first media portion so as to enable generation of secondary content comprising at least a second media portion having a second temporal output characteristic that can differ from the first temporal output characteristic of the at least first media portion.

2. The method of claim 1 wherein the temporal output characteristic relates to one or more of:

temporal co-ordinates of a media portion,
a duration of output of a media portion,
a start time for commencing output of a media portion,
an end time for ceasing output of a media portion,
a time index associated with a media portion, and
a time interval between repeated outputs of a media portion.

3. The method of any one or more of the previous claims, wherein the rendering adaptation information comprises one or more of:

temporal co-ordinates for identifying one or more media portions within the primary content,
temporal co-ordinates for defining temporal output characteristics of one or
more media portions of the secondary content,
a mapping of temporal co-ordinates of one or more media portions of the primary content to temporal co-ordinates of one or more media portions of the secondary content,
spatial co-ordinates for identifying one or more media portions within the primary content,
spatial co-ordinates for defining spatial output characteristics of one or more media portions of the secondary content, and
a mapping of spatial co-ordinates of one or more media portions of the primary content to spatial co-ordinates of one or more media portions of the secondary content.

4. The method of any one or more of the previous claims, further comprising, causing at least in part, analyzing the primary content, wherein the generated rendering adaptation information is dependent on the analysis of the primary content.

5. The method of any one or more of the previous claims, wherein the generated rendering adaptation information is dependent upon one or more of the following:

one or more capabilities of the secondary output device;
one or more a user preferences.

6. The method of any one or more of the previous claims, further comprising causing, at least in part, actions that result in: one or more of:

broadcasting the primary content;
broadcasting the rendering adaptation information.

7. The method of any one or more of the previous claims, further comprising causing, at least in part, actions that result in: one or more of:

sending the rendering adaptation information to a secondary generating device; and
receiving the primary content and generating secondary content from the received primary content and the generated rendering adaptation information.

8. A method comprising causing at least in part actions that result in: one or more of:

receiving broadcasted primary content, wherein the primary content comprises at least a first media portion having a first temporal output characteristic;

receiving rendering adaptation information configured for use in adapting the rendering of the primary content on a secondary content output device; and

generating secondary content from the primary content based on the rendering adaptation information;

wherein the rendering adaptation information comprises temporal information for use in adjusting the rendering of the at least first media portion so as to enable generation of at least a second media portion having a second temporal output characteristic that can differ from the first temporal output characteristic of the at least first media portion.

9. The method of claim 8 further comprising causing, at least in part, actions that result in: one or more of:

conveying the secondary content to the secondary content output device; and
outputting the secondary content on the secondary content output device.

10. The method of any one or more of previous claims 1 to 5, further comprising causing at least in part actions that result in: one or more of:

broadcasting the primary content; and
generating secondary content from the primary content based on the rendering adaptation information; and
broadcasting the secondary content.

11. The method of any one or more of previous claims 1 to 5, further comprising causing at least in part actions that result in: one or more of:

receiving the broadcasted primary content;
conveying the rendering adaptation information to a secondary content output device;
generating secondary content from the primary content based on the rendering adaptation information;
conveying the secondary content to the secondary content output device; and
outputting the secondary content on the secondary content output device.

12. A method comprising causing, at least in part, actions that result in:

generating, for primary content to be broadcasted for output on a primary content output device, rendering adaptation information configured for use in adapting the rendering of the primary content on a secondary content output device thereby providing an output of secondary content which is derived from the primary content; and

wherein: the rendering adaptation information comprises two or more sets of spatial co-ordinates for identifying two or more media portions of the primary content for output as secondary content.

13. A method comprising causing, at least in part, actions that result in:

generating, for primary content to be broadcasted for output on a primary content output device, rendering adaptation information configured for use in adapting the rendering of the primary content on a secondary content output device thereby providing an output of secondary content which is derived from the primary content;

wherein the primary content comprises n dimensional content; and

wherein the rendering adaptation information is configured for use in adjusting the rendering of the n dimensional primary content so as to enable generation of k dimensional secondary content, wherein k<n.

14. An apparatus comprising means configured to perform the method of any one of the previous claims.

15. A computer program that, when run on a computer, performs the method of any one of previous claims 1 to 13.

Figure 1

Generate Rendering Adaptation
Information comprising Temporal
Information

100

101

Figure 2A

200

200a  200b  200c  200d

time
1  2  3  4

Figure 2B

201

201b  201b  201b

time
1  2  3  4

Figure 3

Figure 4

Figure 5

Figure 6

_600_

```
301 ── ┌─────────────────┐         PC          ┌─────────────────┐  302
        │ Receive Primary │ ──────────────────▶ │   Broadcast     │
        │    Content      │                     │ Primary Content │
        └─────────────────┘                     └─────────────────┘
                 │                    │
                 ▼                    │
303 ── ┌─────────────────┐           │
        │ Analyze Primary │           │
        │    Content      │           │
        └─────────────────┘           │
                 │                    ▼
                 ▼            601 ┌─────────────┐       602₁ ┌──────────────┐
304 ── ┌───────────────────────┐  │  Generate   │ ────────▶ │ Broadcast SC₁ │
        │ Generate Rendering    │  │  Secondary  │            └──────────────┘
        │ Adaptation Information │▶ │  Content    │ ────────▶ ┌──────────────┐ 602₂
        └───────────────────────┘  │  versions   │            │ Broadcast SC₂ │
                 ▲    ▲            └─────────────┘            └──────────────┘
                  ╲    ╲                                ────▶ ┌──────────────┐
                   ╲    ╲                                     │ Broadcast SC₃ │
                    ╲    ╲                                    └──────────────┘
   ┌─────────────────┐  ┌─────────────────┐  306                   602₃
   │ Receive Secondary│  │ Receive user    │
   │ Content output   │  │ preferences     │
   │ device           │  └─────────────────┘
   │ information      │
   └─────────────────┘
            305
```

Figure 7

Figure 8A

Figure 8B

Figure 9A

Figure 9B

Figure 10

Figure 11

**EP 2 953 369 A1**

Europäisches Patentamt
European Patent Office
Office européen des brevets

## EUROPEAN SEARCH REPORT

Application Number

EP 15 16 8853

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/070552 A1 (NOKIA CORP [FI]; BOUAZIZI IMED [FI]) 16 June 2011 (2011-06-16) * page 1, line 28 - page 3, line 13 * * page 16, line 23 - page 20, line 5 * ----- | 1-15 | INV. H04N21/234 H04N21/434 |
| X | WO 2014/008637 A1 (NOKIA CORP [FI]; HANNUKSELA MISKA [FI]; LIU CHENGHAO [FI]) 16 January 2014 (2014-01-16) * paragraph [0052] - paragraph [0053] * * paragraph [0099] - paragraph [0103] * ----- | 1-15 | |

TECHNICAL FIELDS
SEARCHED     (IPC)

H04N

The present search report has been drawn up for all claims

| Place of search | Date of completion of the search | Examiner |
|---|---|---|
| Munich | 22 October 2015 | Biro, Zoltan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

24

**ANNEX TO THE EUROPEAN SEARCH REPORT**
**ON EUROPEAN PATENT APPLICATION NO.**                EP 15 16 8853

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2015

| Patent document cited in search report | Publication date | Patent family member(s) | | Publication date |
|---|---|---|---|---|
| WO 2011070552 A1 | 16-06-2011 | CA | 2783592 A1 | 16-06-2011 |
| | | CN | 102687518 A | 19-09-2012 |
| | | EP | 2510669 A1 | 17-10-2012 |
| | | KR | 20120103698 A | 19-09-2012 |
| | | US | 2011307545 A1 | 15-12-2011 |
| | | WO | 2011070552 A1 | 16-06-2011 |
| WO 2014008637 A1 | 16-01-2014 | EP | 2873249 A1 | 20-05-2015 |
| | | US | 2015172353 A1 | 18-06-2015 |
| | | WO | 2014008637 A1 | 16-01-2014 |

EPO FORM P0459

For more details about this annex : see Official Journal of the European Patent Office, No. 12/82